# FASCICULE DE BREVET EUROPEEN

(11) **EP 0 485 654 B1**
(45) Date de publication et mention de la délivrance du brevet: **11.01.1995**
(21) Numéro de dépôt: 90121854.5
(22) Date de dépôt: 15.11.1990
(51) Int. Cl.: A23G 9/20, A23G 9/28

(54) **Procédé et appareil de fabrication d'un article de dessert aéré**
Verfahren und Einrichtung zur Herstellung von lufthaltigen Dessertprodukten
Process and apparatus for manufacturing aerated dessert product

(43) Date de publication de la demande: 20.05.1992
(73) Titulaire: FRISCO-FINDUS AG, CH-9400 Rorschach (CH)
(72) Inventeur: Bertrand, Francis-Victor, F-60510 Laversines (FR); Plessier, Alain, F-60510 Bresles (FR); Daouse, Alain, F-60430 Noailles (FR)

(56) Documents cités:
- EP-A- 0 221 757
- FR-A- 1 412 936
- US-A- 2 978 996
- US-A- 4 881 663

## Description

L'invention concerne un procédé et un appareil de fabrication d'un article de dessert aéré, notamment une mousse ou une confiserie glacée contenant des feuillets de composition croquante dans sa masse.

Dans le domaine des articles de confiserie glacée, soit en portion collective du type des gâteaux ou des bacs, soit en portion individuelle du type des bâtonnets, sucettes, cônes, cylindres, pots et analogues, il existe des articles contenant des paillettes de chocolat réparties dans la masse de crème glacée.

Dans le but de produire des textures nouvelles, on a proposé aux consommateurs des articles de confiserie glacée contenant des lames minces de matière croquante leur conférant une texture feuilletée.

Ainsi, selon EP 322.469 on fabrique des articles tels que les bâtonnets ou cônes feuilletés, par formation successive de couches de crème glacée et de couches minces de chocolat par congélation partielle de la crème glacée à la périphérie, aspiration de la partie centrale encore liquide, pulvérisation de chocolat dans l'alvéole ainsi créée, puis remplissage de la partie centrale avec de la crème glacée. Du fait des contraintes de fabrication, les articles obtenus possèdent des couches minces croquantes longitudinales continues de révolution dont le nombre est relativement limité.

Selon EP 221757, on a proposé de fabriquer des cônes ou bâtonnets glacés contenant dans leur masse de minces copeaux de chocolat en créant dans un boudin de crème glacée extrudé verticalement des gorges longitudinales à l'aide de déflecteurs et en remplissant les gorges ainsi formées avec du chocolat, les veines de chocolat rendu solide au contact de la crème glacée se brisant de manière aléatoire en copeaux lorsque le boudin se replie sur lui-même en remplissant le moule.

Selon USA 2190226 dans une forme d'exécution représentée à la Fig. 5, on introduit du chocolat par pulvérisation par une buse annulaire dans les interstices entre des veines de crème glacée, produites par extrusion par une buse en couronne pourvue d'ajutages en fente disposés radialement, on fait converger l'ensemble par gravité en un flux vertical dans un entonnoir, puis on l'évacue par pression dans un tube coudé, ce qui produit des flocons de chocolat uniformément répartis dans la masse de crème glacée. Le but de ce dispositif est de solidifier le chocolat en particules minces distinctes au contact de la crème glacée et de mélanger ces particules uniformément à la masse de crème glacée.

Ces deux derniers procédés ne conduisent pas au résultat visé. En effet, la texture obtenue n'est pas la même que si les lames minces de chocolat formaient des feuillets pratiquement continus. On a constaté en effet que la sensation était réellement agréable lorsque la dent traversait des couches minces contrastées de matière moelleuse et de matière croquante bien discernables.

Selon FR-A-l412936, on réalise l'extrusion de crème glacée bi-parfum dans un moule à bâtonnet au moyen d'une buse à joint tournant par dépôt avec déplacement vertical de la buse, l'extrudeur produisant un boudin de surface cylindrique. La ligne de séparation entre les deux masses de crème glacée contrastées configure une hélice à la surface du cylindre. Les deux masses de crème glacée sont acheminées vers l'ajutage de sortie rotatif de manière séparée grâce à une cloison interne torse, tournant avec l'ajutage, qui les dispose en deux demi-hélices complémentaires formant un cylindre plein puisque, la cloison étant mince, les deux demi-hélices fusionnent à la sortie de l'ajutage sous l'effet de la pression d'extrusion. La formation d'un boudin torsadé n'est pas souhaitée, car le sens de rotation de l'ajutage est opposé à celui du produit sortant de manière à compenser la tendance qu'aurait le boudin à tourner sur lui-même pendant l'extrusion du fait de la forme torse de la cloison.

Le but de l'invention est de mettre à disposition un article de dessert aéré du type précédent contenant une grande quantité de feuillets de composition croquante disposés transversalement se présentant sous forme de rubans pratiquement continus, par un procédé et un appareil simple permettant une production à grande cadence.

Le procédé de l'invention est caractérisé par les étapes suivantes:
- on forme par extrusion à partir d'une buse verticale de révolution tournant autour de son axe à travers un ajutage en fente un ruban de composition aérée en forme d'hélice,
- on applique sur le ruban une couche d'épaisseur inférieure à 1 mm de composition croquante par pulvérisation latérale autour du ruban à partir d'une buse fixe située en dessous de la buse rotative, de sorte que le flux pulvérisé converge vers le ruban et soit appliqué dans les passages de l'hélice en formation et
- on dépose sur un support comestible ou dans un moule se présentant sous les buses des couches alternées successives de composition aérée et de composition croquante sans déplacement vertical des buses par rapport au support ou au moule.

Par "ajutage en fente", on entend que l'orifice de sortie de la buse est nettement plus allongé que large. La forme de la fente ne se limite pas à un rectangle mais peut avoir plusieurs branches, par exemple être constituée d'une étoile à trois branches symétriques par rapport à l'axe de la buse ou être cruciforme. Les "branches" de la fente peuvent être légèrement curvilignes, par exemple la fente peut représenter un S applati. En variante, l'ajutage peut comporter plusieurs fentes rapprochées distinctes, rectangulaires ou curvilignes, disposées symétriquement par rapport à l'axe de la buse, par exemple en étoile ou parallèlement et décalées. Le ruban de confiserie glacée sortant de la buse a donc une section fonction de la forme de l'ajutage. Si par exemple l'ajutage est une fente en forme d'étoile à trois branches, le ruban possède trois pans à la sortie de la buse.

Du fait de la rotation de la buse sur elle-même, et de l'immobilité du moule pendant le remplissage ou de la grande vitesse de rotation de la buse relativement à la vitesse de déplacement du support, le ruban s'enroule sur lui-même pour former une hélice.

Le terme "composition croquante" désigne une composition grasse contenant des matières grasses à point de glissement supérieur à 0°C et spécialement supérieur à la température ambiante. Ce peut être un beurre végétal comme le beurre de cacao, un produit de remplacement ou un équivalent du beurre de cacao, spécialement une couverture grasse d'utilisation courante en confiserie. Ce peut être également une composition essentiellement aqueuse ou sucrée, par exemple un sucre cuit. Une composition, grasse, aqueuse ou à base de sucre peut contenir des arômes ou colorants. La composition doit être liquide pour pouvoir être appliquée en couche mince par projection et devenir rapidement dure et cassante au contact de la composition aérée froide. Elle doit présenter de bonnes propriétés d'étalement. Elle est de préférence suffisamment mince pour se briser en petits éclats sous la dent, en pratique d'épaisseur inférieure à 1 mm et spécialement inférieure à 0,5 mm.

La composition aérée est une composition glacée aérée, par exemple une crème glacée ou un sorbet foisonnés, ou une mousse réfrigérée ou glacée aérée, par exemple à base de fromage ou de crème foisonnés, de texture moelleuse.

Selon l'invention, la composition croquante est projetée latéralement à partir d'une buse entourant l'hélice sans contact avec elle. Les flux de projection doivent être tels qu'ils convergent depuis l'extérieur vers les passages de l'hélice, c'est-à-dire les surfaces creuses situées entre les crêtes et que la composition croquante, appliquée sur ces surfaces pénètre à l'intérieur de la masse de composition aérée sous l'effet de la force centrifuge donnée par la rotation de la buse.

Le procédé selon l'invention convient pour fabriquer des articles de dessert de faible à moyen volume placés dans des moules comestibles ou non, par exemple dans le cas de cônes glacés, remplis de façon discontinue par dosages successifs. Il s'applique particulièrement à la fabrication des cônes glacés pour lesquels le moule est constitué d'un cornet en gaufrette, de préférence revêtu à l'intérieur d'une fine couche de couverture grasse jouant le rôle de barrière d'humidité. Pour fabriquer de tels articles, on place les gaufrettes dans des trous ménagés dans des plaques solidaires d'une chaîne. La chaîne est animée d'un mouvement d'avancement pas à pas. Elle peut faire partie d'une installation linéaire ou d'un carousel. Les cônes de gaufrette se présentent ainsi devant le dispositif de remplissage et restent immobiles pendant le remplissage. Ainsi, un cycle se décompose environ en la moitié du temps consacrée au déplacement du moule, l'autre moitié étant destinée au remplissage. Selon l'invention, on peut réaliser 45 à 65 cycles par min., ce qui constitue une cadence remarquable pour les articles complexes visés. Pour une telle cadence, la buse rotative tourne en permanence à environ 100-200 tours par min.

Le procédé selon l'invention est également approprié pour placer une composition aérée feuilletée décrite précédemment comme décor de finition d'un article, par exemple d'un cornet ou d'un pot que l'on aurait préalablement partiellement rempli d'une composition aérée d'une autre nature. En variante, la composition aérée feuilletée peut être placée au fond d'un moule et être recouverte d'une composition aérée d'une autre nature. La composition aérée feuilletée peut également constituer le centre d'un article plus grand par exemple d'un pot ou d'un bac et être ainsi entourée d'une composition aérée d'une autre nature.
Une composition aérée glacée feuilletée peut enfin être déposée en ruban hélicoïdal continu, par exemple comme décor, sur une bande continue de section rectangulaire en défilement sous les buses, ou comme garnissage dans une bande continue de section en forme de U. Une telle bande peut être en confiserie glacée et/ou en biscuit, par exemple en génoise. Après la pose du décor ou de la garniture, l'ensemble peut être tronçonné en portions pour former un gâteau.
L'invention concerne également un appareil de fabrication d'un article de dessert aéré contenant des feuillets de composition croquante dans sa masse, caractérisé par le fait qu'il comprend:
- un support comestible ou un moule destiné à recevoir la composition aérée,
- au-dessus du support ou du moule, une buse d'extrusion verticale de révolution composée d'une partie supérieure fixe alimentée en composition aérée et d'une partie inférieure mobile en rotation autour de son axe, reliée à la partie fixe par un joint tournant et munie d'un ajutage d'extrusion en fente formant un ruban de composition aérée en hélice,
- entre la buse d'extrusion et le support ou le moule, une buse de pulvérisation de composition croquante fixe, munie d'orifices répartis autour du ruban et dirigés vers le ruban de sorte que le flux pulvérisé converge vers le ruban et soit appliqué sur les passages de l'hélice en formation,
- des moyens de mise en rotation permanente de l'ajutage d'extrusion,
- des moyens de mise en mouvement de translation du support ou du moule.

Selon un mode de réalisation particulier destiné au remplissage d'un moule, l'appareil comprend des moyens de translation pas à pas du moule de sorte que celui-ci soit immobile pendant la durée de son remplissage et
- des moyens d'interruption des alimentations en confiserie glacée et en composition croquante entre les remplissages.

Dans une forme d'exécution préférée, la buse de pulvérisation de composition croquante se présente sous la forme d'un anneau percé d'orifices dirigés vers le bas et vers l'axe de l'anneau, régulièrement répartis autour de celui-ci. Les orifices peuvent être de différente grandeur. Par exemple, la buse annulaire peut comporter 6 à 12 orifices, de diamètre 0,5 à 1 mm. La projection de la composition croquante peut également avoir lieu par des fentes de différentes longueurs et largeur. L'anneau peut être remplacé par des buses individuelles réparties autour et en contrebas de la buse rotative bien que cette forme ne soit pas préférée pour des raisons d'encombrement.
La distribution de composition croquante peut être avantageusement réalisée par des orifices orientant les jets tangentiellement au flux de composition aérée en rotation, de tel sorte que l'impact du jet soit en sens inverse de la rotation. De préférence, le flux annulaire de composition croquante constitué par l'ensemble des jets est dirigé vers le bas selon un angle de 20 à 30° par rapport à l'horizontale.

L'invention sera mieux comprise à partir de la description qui va suivre, faite en regard des dessins annexés montrés à titre d'exemple dans lesquels:
- la figure 1 illustre schématiquement l'appareil pendant le remplissage,
- la figure 2 est une vue en coupe partielle de la buse d'extrusion de composition aérée,
- la figure 3 est une vue de détail, partiellement en coupe des buses d'extrusion de composition aérée et de projection de composition croquante et les figures 4,5,6,7 et 8 représentent différents ajutages d'extrusion.

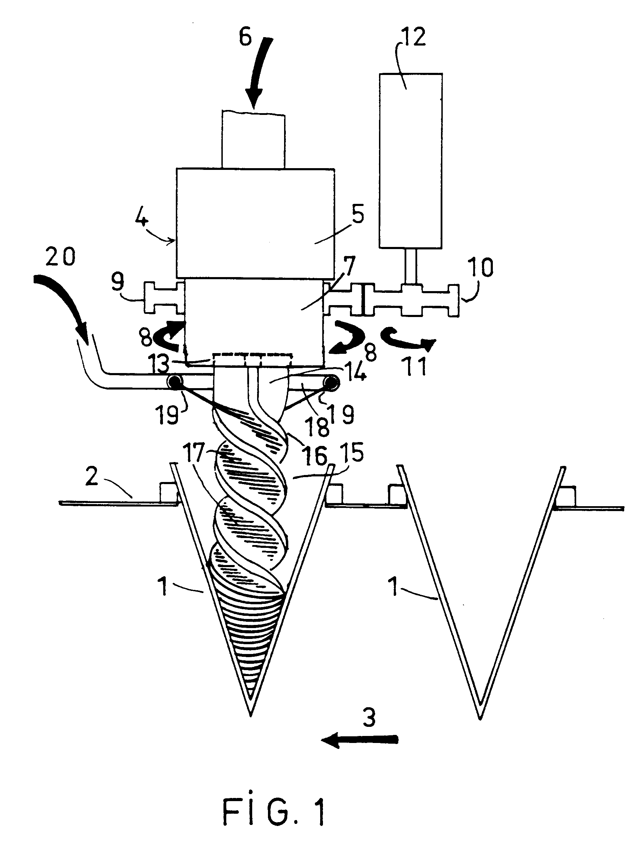

A la figure 1, un cornet de gaufrette 1 déjà revêtu intérieurement d'une couche de couverture de chocolat est porté par une plaque 2. La plaque 2 est solidaire d'une chaîne sans fin cheminant pas à pas dans la direction 3. Elle stationne sous l'ensemble de remplissage, le temps d'arrêt de la chaîne correspondant à la durée du remplissage d'un cornet. L'ensemble de remplissage est constitué d'une partie supérieure fixe 5 alimentée en confiserie glacée en 6 et d'une partie inférieure 7 tournant autour de son axe suivant la flèche 8 dans le sens des aiguilles d'une montre. La partie mobile 7 de la buse est entraînée en rotation permanente par un engrenage 9 en prise sur un engrenage 10 tournant suivant la flèche 11. L'engrenage 10 est actionné par un moteur pneumatique 12.
La partie mobile 7 de la buse débouche sur un ajutage 13 constitué d'une fente en forme d'étoile à trois branches.

L'ajutage 13 délivre un ruban à trois pans 14 qui, sous l'effet de la rotation de la buse se transforme en l'hélice 15. L'hélice 15 comporte une crête 16 et des passages 17. La buse de pulvérisation 18 est composée d'un tube annulaire situé juste en-dessous de l'ajutage 13 de sorte que l'anneau entoure l'hélice. Le tube annulaire comporte des orifices 19 disposés autour de l'anneau. La couverture de chocolat fondu alimentée en 20 est pulvérisée par les orifices 19 en jets convergeants et le flux pulvérisé vient napper les surfaces creuses des passages 17 entre les crêtes 16. Au contact de la confiserie glacée, la couverture durcit en feuillets qui viennent s'insérer entre les couches successives de confiserie glacée qui s'empillent dans le cornet.

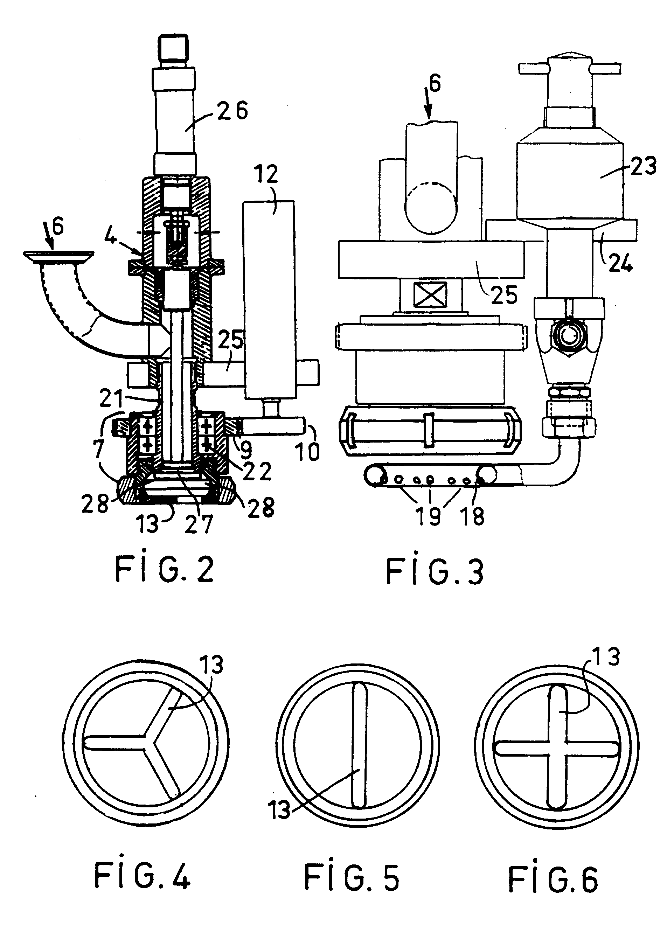

Comme montré à la figure 2, la partie mobile 7 est en forme de couronne et vient entourer un moyeu central fixe 21 de la buse 4. Elle tourne librement autour de celui-ci grâce aux roulements à billes 22.

A la figure 3, la buse de pulvérisation 18 est reliée à un pistolet 23 qui permet la projection de produits liquides visqueux dite "de basse pression", par exemple de l'ordre de 0,1 à 1 bar par rapport à la pression atmosphérique. Le pistolet 23 est monté sur une plaque support 24 fixée à la plaque 25 qui porte la buse 4 et le moteur 12.

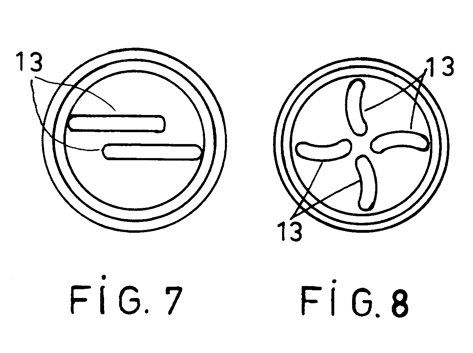

A la figure 4, l'ajutage d'extrusion est en forme d'une fente en étoile à trois branches symétriques par rapport à l'axe de la buse d'extrusion. A la figure 5, l'ajutage est rectangulaire cependant qu'il est cruciforme à la figure 6. A la figure 7, l'ajutage comporte deux fentes parallèles décalées. A la figure 8, l'ajutage est constitué de quatre fentes curvilignes.

Le fonctionnement d'un cycle de remplissage est le suivant. L'entraînement pas à pas non représenté fait avancer un cornet vide sous l'ensemble de remplissage. Dès que le cornet est immobilisé, le vérin 26 ouvre la soupape 27 et libère la confiserie glacée. En même temps, la couverture de chocolat chaud est pulvérisée par la buse 18. Une fois le cornet rempli, le vérin 26 actionne la soupape à piston 27 et ferme l'alimentation en confiserie glacée. Lorsque le piston remonte, la soupape, de par sa configuration, aspire le produit restant dans la partie basse 28 de la buse, ce qui conduit à une coupe nette de l'alimentation en crème glacée sans écoulement. Au même moment, un clapet non représenté ferme l'alimentation en couverture chocolatée. Le clapet peut être commandé par un détecteur magnétique non représenté de fin de course du piston du vérin 26.

La confiserie glacée est avantageusement une crème glacée à 5-10% en poids de matière grasse et 30-45% en poids de matière sèche, foisonnée à au moins 90%_{,} extrudée à une température de -5 à -3°C. Bien entendu, les paramètres d'extrusion dépendent du type de crème glacée et plus particulièrement de son point de congélation, de la quantité de matière grasse et de la nature des stabilisants. Sa consistance résulte d'un compromis entre une fluidité conduisant à un remplissage correct de la pointe du cornet et une viscosité permettant une coupe franche au dosage.

La composition croquante est pulvérisée à environ 40 -45°C.

Une fois les alimentations coupées, la chaîne 3 peut avancer d'un pas et présenter un nouveau cornet au remplissage. L'alimentation en crème glacée peut être commandée par un détecteur d'arrêt de la chaîne.

Dans la description détaillée précédente, on a montré le remplissage d'une seule file de cornets. On peut bien entendu envisager le remplissage simultané de plusieurs files de cornets constituant des rangées sans sortir du cadre de l'invention. Dans les rangées, les cornets peuvent être placés en quinconce pour minimiser l'encombrement.

On a montré une masse de crème glacée avec de fines couches intermédiaires de chocolat. La masse de confiserie glacée peut être constituée d'une composition glacée aérée autre que la crème glacée, par exemple un sorbet aéré de consistance moelleuse.

On a montré un article se présentant sous la forme d'un cône glacé. L'article peut également se présenter sous la forme d'une sucette glacée de section circulaire et comporter un bâton de préhension en son centre. Dans ce cas, il doit encore être démoulé et éventuellement enrobé d'une couche de couverture. L'article peut également se présenter sous la forme d'un pot. Dans ce dernier cas, on consomme la confiserie glacée par exemple à l'aide d'une cuiller et la texture feuilletée apporte une sensation gustative nouvelle aux portions.

On a montré le remplissage d'une confiserie glacée mono-parfum. On peut sans sortir du cadre de l'invention produire par exemple des articles de confiserie glacée bi-parfum avec un joint tournant approprié.

Enfin, on a montré la fabrication avec remplissage d'un moule. On peut procéder à la décoration ou au garnissage d'un support, par exemple d'une bande continue de section rectangulaire ou en forme de U avec un ruban hélicoïdal feuilleté extrudé en continu, l'ensemble étant ensuite tronçonné pour former un gâteau.

Bien entendu, ce qui précède vaut également pour la fabrication d'un article de dessert à base de mousse réfrigérée, par exemple à base de crème ou de fromage foisonnés contenant des feuillets de matière croquante, par exemple de chocolat noir, dans un pot ou un bac.

## Revendications

1. Procédé de fabrication d'un article de dessert aéré contenant des feuillets de composition croquante dans sa masse, caractérisé par les étapes suivantes:
- on forme par extrusion à partir d'une buse verticale de révolution tournant autour de son axe à travers un ajutage en fente un ruban de composition aérée en forme d'hélice,
- on applique sur le ruban une couche d'épaisseur inférieure à 1 mm de composition croquante par pulvérisation latérale autour du ruban à partir d'une buse fixe située en dessous de la buse rotative, de sorte que le flux pulvérisé converge vers le ruban et soit appliqué dans les passages de l'hélice en formation et,
- on dépose sur un support comestible ou dans un moule se présentant sous les buses des couches alternées successives de confiserie glacée et de composition croquante sans déplacement vertical des buses par rapport au support ou au moule.

2. Procédé selon la revendication 1, caractérisé par le fait que l'on fabrique un cône de crème glacée contenant des feuillets de chocolat en remplissant un moule en gaufrette revêtue à l'intérieur d'une fine couche de chocolat.

3. Procédé selon la revendication 1, caractérisé par le fait que l'on fabrique un bâtonnet de crème glacée contenant des feuillets de chocolat en remplissant un moule, en insérant un bâtonnet, en démoulant le contenu du moule puis en l'enrobant d'une couverture de chocolat.

4. Procédé selon la revendication 1, caractérisé par le fait que l'on remplit un pot ou un bac de crème glacée, de crème aérée ou de mousse contenant des feuillets de chocolat.

5. Procédé selon la revendication 1, caractérisé par le fait que l'on décore ou garnit une bande continue de confiserie glacée et/ou de biscuit en défilement sous les buses avec un ruban hélicoïdal continu et que l'on tronçonne l'ensemble en portions.

6. Appareil de fabrication d'un article de dessert aéré contenant des feuillets de composition croquante dans sa masse selon le procédé d'une de revendications 1-5, caractérisé par le fait qu'il comprend:
- un support comestible ou un moule destiné à recevoir la composition aérée,
- au-dessus du support ou du moule, une buse d'extrusion verticale de révolution composée d'une partie supérieure fixe alimentée en composition aérée et d'une partie inférieure mobile en rotation autour de son axe, reliée à la partie fixe par un joint tournant et munie d'un ajutage d'extrusion en fente formant un ruban de composition aérée en hélice,
- entre la buse d'extrusion et le support ou le moule, une buse de pulvérisation de composition croquante fixe, munie d'orifices répartis autour du ruban et dirigés vers le ruban de sorte que le flux pulvérisé converge vers le ruban et soit appliqué sur les passages de l'hélice en formation,
- des moyens de mise en rotation permanente de l'ajutage d'extrusion, et
- des moyens de mise en mouvement de translation du support ou du moule.

7. Appareil selon la revendication 6, destiné au remplissage d'un moule, caractérisé par le fait qu'il comprend:
- des moyens de translation pas à pas du moule de sorte que celui-ci soit immobile pendant la durée de son remplissage et
- des moyens d'interruption des alimentations en confiserie glacée et en composition croquante entre les remplissages.

8. Appareil selon la revendication 6, destiné à la décoration ou au garnissage d'un support comestible, caractérisé par le fait qu'il comprend des moyens de translation continue du support sous les buses et que les buses délivrent un ruban hélicoïdal continu de composition aérée feuilletée.

9. Appareil selon l'une des revendications 6 à 8, caractérisé par le fait que l'ajutage d'extrusion de composition aérée est une fente à trois branches symétriques par rapport à l'axe de la buse.

10. Appareil selon la revendication 6, caractérisé par le fait que le flux annulaire convergeant de composition croquante est dirigé vers le bas selon un angle de 20 à 30° par rapport à l'horizontale.

## Claims

1. A process for the production of an aerated dessert article containing flakes of crispy composition within its mass, characterized in that it comprises the following steps:
- a ribbon of aerated composition is formed in the shape of a helix by extrusion through a slot die from a vertical nozzle in the form of a body of revolution rotating about its axis,
- a less than 1 mm thick layer of crispy composition is applied to the ribbon by lateral spraying around the ribbon from a fixed nozzle situated below the rotating nozzle so that the sprayed flow converges towards the ribbon and is introduced into the passages of the helix in the course of formation and
- alternate layers of aerated composition and crispy composition are successively applied to an edible support or to a mould disposed beneath the nozzles without vertical displacement of the nozzles relative to the support or the mould.

2. A process as claimed in claim 1, characterized in that an ice cream cone containing flakes of chocolate is made by filling a wafer mould coated internally with a thin layer of chocolate.

3. A process as claimed in claim 1, characterized in that a stick ice cream containing flakes of chocolate is made by filling a mould, inserting a stick, removing the stick ice cream from the mould and coating it with a covering of chocolate.

4. A process as claimed in claim 1, characterized in that a tub or container is filled with ice cream, aerated cream or mousse containing flakes of chocolate.

5. A process as claimed in claim 1, characterized in that a continuous strand of ice confectionery and/or cake passing beneath the nozzles is decorated or filled with a continuous helical ribbon and the whole is cut into portions.

6. An apparatus for the production of an aerated dessert article containing flakes of crispy composition within its mass by the process claimed in claims 1 to 5, characterized in that it comprises:
- an edible support or a mould intended to receive the aerated composition,
- above the support or the mould, a vertical extrusion nozzle in the form of a body of revolution consisting of a fixed upper part fed with the aerated composition and a lower part rotatable about its axis which is connected to the fixed part by a rotating joint and which is equipped with an extrusion die in the form of a slot which forms a helical ribbon of aerated composition,
- between the extrusion nozzle and the support or the mould, a fixed nozzle for spraying crispy composition which is formed with orifices distributed around the ribbon and directed towards the ribbon so that the sprayed flow converges towards the ribbon and is introduced into the passages of the helix in the course of formation,
- means for permanently rotating the extrusion die,
- means for imparting a translatory movement to the support or the mold.

7. An apparatus as claimed in claim 6 intended for the filling of a mould, characterized in that it comprises
- means for imparting a step-by-step translatory movement to the mould so that it is stationary during filling and
- means for interrupting the supplies of ice confectionery and crispy composition between successive fillings.

8. An apparatus as claimed in claim 6 intended for the decoration or filling of an edible support, characterized in that it comprises means for continuously moving the support beneath the nozzles and in that the nozzles deliver a continuous helical ribbon of flaky aerated composition.

9. An apparatus as claimed in any of claims 6 to 8, characterized in that the extrusion die for the aerated composition is a slot with three branches symmetrical in relation to the axis of the nozzle.

10. An apparatus as claimed in claim 6, characterized in that the convergent annular flow of crispy composition is directed downwards at an angle of 20 to 30° relative to the horizontal.

## Patentansprüche

1. Verfahren zur Herstellung eines lufthaltigen Dessertproduktes, das Blättchen aus einer Krokant-Zusammensetzung in seiner Masse enthält,
**gekennzeichnet** durch die folgenden Schritte:
- Bildung eines wendelförmigen Bandes der lufthaltigen Zusammensetzung durch Extrusion ausgehend von einer vertikalen Drehdüse, die sich um ihre Achse quer zu einer Schlitzdüsenöffnung dreht,
- Aufbringung einer Schicht aus einer Krokant-Zusammensetzung auf das Band mit einer Dicke von weniger als 1 mm durch Querspritzen um das Band herum ausgehend von einer ortsfesten Düse, die sich unterhalb der Drehdüse befindet, so daß der Spritzfluß in Richtung auf das Band konvergiert und in den Wendelgängen der sich bildenden Wendel aufgebracht wird, und
- Anbringung von abwechselnden aufeinanderfolgenden Schichten aus Eisware und aus einer Krokant-Zusammensetzung auf einem eßbaren Träger oder in einer Form, die sich unter den Düsen befindet, ohne die Düsen bezüglich des Trägers oder der Form vertikal zu verschieben.

2. Verfahren nach Anspruch 1,
dadurch **gekennzeichnet,**
daß eine Eiscreme-Trichtertüte hergestellt wird, die Blättchen aus Schokolade enthält, indem eine Waffelform gefüllt wird, die im Inneren mit einer dünnen Lage aus Schokolade beschichtet ist.

3. Verfahren nach Anspruch 1,
dadurch **gekennzeichnet,**
daß ein Stieleis hergestellt wird, das Blättchen aus Schokolade enthält, indem eine Form gefüllt wird, ein Stäbchen eingefügt wird, der Inhalt der Form aus der Form herausgenommen wird und dann mit einem Bezug aus Schokolade umhüllt wird.

4. Verfahren nach Anspruch 1,
dadurch **gekennzeichnet,**
daß ein Töpfchen oder eine Schale mit Eiskrem, lufthaltiger Creme oder mit einer Schaumcreme gefüllt wird, die Blättchen aus Schokolade enthält.

5. Verfahren nach Anspruch 1,
dadurch **gekennzeichnet,**
daß ein kontinuierliches Band aus Eisware und/oder Bisquit mit einem wendelförmigen kontinuierlichen Band dekoriert oder garniert wird, indem es unter den Düsen hindurchgeht, und daß das Ganze in Portionen geschnitten wird.

6. Vorrichtung zur Herstellung eines lufthaltigen Dessertprodukts, das Blättchen aus einer Krokant-Zusammensetzung in seiner Masse enthalt, gemäß dem Verfahren nach einem der Ansprüche 1 bis 5,
dadurch **gekennzeichnet,**
daß es enthält:
- einen eßbaren Träger oder eine Form zur Aufnahme der lufthaltigen Zusammensetzung,
- oberhalb des Trägers oder der Form eine vertikale Dreh-Extrusionsdüse, die aus einem festen oberen Teil, der mit einer lufthaltigen Zusammensetzung versorgt wird, und einem um seine Achse drehbeweglichen unteren Teil besteht, der mit dem fest angebrachten Teil durch eine Drehverbindung verbunden ist und eine Schlitz-Extrusionsdüsenöffnung aufweist, die ein wendelförmiges Band der lufthaltigen Zusammensetzung bildet,
- zwischen der Extrusionsdüse und dem Träger oder der Form zum Spritzen der Krokant-Zusammensetzung, eine ortsfeste Düse, die mit Öffnungen versehen ist, die um das Band herum verteilt angebracht sind und so in Richtung des Bandes ausgerichtet sind, daß der Spritzfluß in Richtung des Bands konvergiert und in den Wendelgängen der sich bildenden Wendel aufgebracht wird,
- einer Einrichtung zur andauernden Drehung der Extrusionsdüse, und
- einer Einrichtung zur translatorischen Bewegung des Trägers oder der Form.

7. Vorrichtung nach Anspruch 6 zur Füllung einer Form,
dadurch **gekennzeichnet,**
daß sie aufweist:
- eine Einrichtung zur schrittweisen translatorischen Bewegung der Form, so daß diese während der Zeitdauer ihrer Füllung nicht bewegt wird und
- eine Einrichtung zur Unterbrechung des Nachschubs an Eisware und an Krokant-Zusammensetzung zwischen den Füllvorgängen.

8. Vorrichtung nach Anspruch 6 zur Dekorierung und Garnierung eines eßbaren Trägers,
dadurch **gekennzeichnet,**
daß sie eine Einrichtung zur kontinuierlichen translatorischen Bewegung des Trägers unter den Düsen aufweist und die Düsen ein kontinuierliches wendelförmiges Band der mit Blättchen versehenen lufthaltigen Zusammensetzung liefern.

9. Vorrichtung nach einem der Ansprüche 6 bis 8,
dadurch **gekennzeichnet,**
daß die Extrusionsdüse der lufthaltigen Zusammensetzung eine Schlitzöffnung mit drei Verzweigungen ist, die bezüglich der Achse der Düse symmetrisch sind.

10. Vorrichtung nach Anspruch 6,
dadurch **gekennzeichnet,**
daß der ringförmige konvergierende Fluß der Krokant-Zusammensetzung in einem Winkel von 20° bis 30° bezüglich der Horizontalen nach unten gerichtet ist.
